# EUROPEAN PATENT SPECIFICATION

(11) **EP 4 616 989 B1**
(45) Date of publication and mention of the grant of the patent: **18.11.2026**
(21) Application number: 25155544.7
(22) Date of filing: 03.02.2025
(51) Int. Cl.: B23K 26/082, B23K 26/244

(54) **JOINING METHOD OF DISSIMILAR METAL PLATES, JOINING APPARATUS AND JOINED BODY**
VERBINDUNGSVERFAHREN VON UNGLEICHEN METALLPLATTEN, VERBINDUNGSVORRICHTUNG UND VERBUNDENER KÖRPER
PROCÉDÉ D'ASSEMBLAGE DE PLAQUES MÉTALLIQUES DISSEMBLABLES, APPAREIL D'ASSEMBLAGE ET CORPS ASSEMBLÉ

(30) Priority: 11.03.2024 JP 2024037209
(43) Date of publication of application: 17.09.2025
(73) Proprietor: MAZDA MOTOR CORPORATION, Hiroshima 730-8670 (JP)
(72) Inventor: ANZAI, Shintaro, Aki-gun, Hiroshima, 730-8670 (JP); HASHIMOTO, Akira, Aki-gun, Hiroshima, 730-8670 (JP)
(74) Representative: Müller-Boré & Partner Patentanwälte PartG mbB

(56) References cited:
- WO-A1-2013/167240
- DE-B3- 102016 008 395

## Description

### TECHNICAL FIELD

The present invention relates to a joining method of dissimilar metal plates, a joining apparatus, and a joined body.

### BACKGROUND

JP6998630B1 discloses an art for joining dissimilar metal plates made of different materials, such as copper and aluminum. This art irradiates a laser beam onto an overlapping area of a first metal plate and a second metal plate to form a welded part in the overlapping area by heat caused by the irradiation of the laser beam.

When an irradiation locus of the laser beam in the overlapping area of the dissimilar metal plates draws a route including a nonlinear section, such as a sine-wave shape, it is difficult to maintain a constant moving speed of the irradiation point of the laser beam throughout the irradiation locus. In this case, since some parts with insufficient welding widths and depths may be produced in the welded part (where the welding volume is small) formed along the irradiation locus of the laser beam, the joint strength of the dissimilar metal plates may be lowered.

DE 10 2016 008395 B3, on which the preamble of the independent claims is based, discloses a method for welding dissimilar metallic joining partners.

### SUMMARY

One purpose of the present invention is to provide a j oining method of dissimilar metal plates, a joining apparatus, and a joined body, which are capable of increasing a joint strength of the dissimilar metal plates.

The invention is defined in independent claims. A method of joining dissimilar metal plates comprised of a first metal plate and a second metal plate that are made of different materials is provided. The method includes a placement step of forming an overlapping area where the first metal plate and the second metal plate are placed so as to be overlapped with each other, and a laser welding step of irradiating a laser beam onto the overlapping area, and reciprocating an irradiation point of the laser beam onto the overlapping area in a perpendicular direction perpendicular to a given direction, while moving the irradiation point in the given direction to form a welded part in the overlapping area along an irradiation locus of a wave shape or a sine-wave shape having a given amplitude in the perpendicular direction. In the laser welding step, the laser beam is irradiated onto the overlapping area so that a plurality of irradiation loci are drawn so as to be separated from each other in the perpendicular direction, and when seen in the given direction, one of the irradiation loci adjacent to another of the irradiation loci in the perpendicular direction is overlapped within a range of the amplitude of the other irradiation locus.

In the laser welding step, the laser beam may be irradiated onto the overlapping area so that three or more irradiation loci are drawn with the same amplitude, without shifting phase, and a pitch of the centers of the amplitudes is an equal interval.

In the laser welding step, when drawing the plurality of irradiation loci, the laser beam may be irradiated onto the overlapping area on a basis of the irradiation locus drawn in a first time so that the irradiation loci in and after a second time are drawn alternatingly on either side in the perpendicular direction.

In the laser welding step, the laser beam may be irradiated onto the overlapping area so that the plurality of irradiation loci are all drawn in one way in the given direction.

In the laser welding step, a ratio of the amplitude to the pitch may be set within a range of 1.3 or more and 3.3 or less for the plurality of irradiation loci.

A joining apparatus configured to join dissimilar metal plates comprised of a first metal plate and a second metal plate that are made of different materials is provided. The apparatus includes a support base configured to form an overlapping area where the first metal plate and the second metal plate are placed so as to be overlapped with each other, a laser oscillator configured to oscillate a laser beam, and a scanner configured to irradiate the laser beam oscillated by the oscillation module onto the overlapping area, and reciprocating an irradiation point of the laser beam onto the overlapping area in a perpendicular direction perpendicular to a given direction, while moving the irradiation point in the given direction to form a welded part in the overlapping area along an irradiation locus of a wave shape or a sine-wave shape having a given amplitude in the perpendicular direction. The irradiation module irradiates the laser beam onto the overlapping area so that a plurality of irradiation loci are drawn so as to be separated from each other in the perpendicular direction, and when seen in the given direction, one of the irradiation loci adjacent to each other in the perpendicular direction is overlapped within a range of the amplitude of the other irradiation locus.

A joined body of dissimilar metal plates, formed by joining a first metal plate and a second metal plate that are made of different materials is provided. The joined body includes an overlapping area wherein the first metal plate and the second metal plate are overlapped with each other, and a plurality of welded parts, each formed in the overlapping area, extending in a given direction, and having a wave shape or a sine-wave shape with given amplitude in a perpendicular direction perpendicular to the given direction. The plurality of welded parts are separated from each other in the perpendicular direction, and when seen in the given direction, the sine-wave shape of one of the welded parts adjacent to another of the welded parts in the perpendicular direction is overlapped within a range of the amplitude of the sine-wave shape of the other welded part.

### BRIEF DESCRIPTION OF DRAWINGS

Fig. 1 is a perspective view schematically illustrating a configuration of a joining apparatus according to one embodiment of the present invention.
Figs. 2A and 2B are views illustrating a joining method according to this embodiment.
Fig. 3A is an enlarged view of a S part in Fig. 2A, and Figs. 3B and 3C are enlarged cross-sectional views of S1 and S2 parts in Fig. 3, respectively.
Fig. 4 is a view illustrating a relationship between amplitude and a pitch in a plurality of irradiation loci.
Fig. 5A is a view illustrating a joined body according to this embodiment, and Fig. 5B is an enlarged view of a SS part in Fig. 5A.

### DETAILED DESCRIPTION

Hereinafter, a joining method, a joining apparatus, and a joined body of dissimilar metal plates according to one embodiment will be described with reference to the accompanying drawings. Below, about the directions, a given direction is referred to as a "given direction Y," a direction perpendicular to the given direction Y in a horizontal plane is referred to be as a "perpendicular direction X," and a direction vertical to the given direction Y and the perpendicular direction X is referred to be as an "up-and-down direction Z."

### [Joining Apparatus]

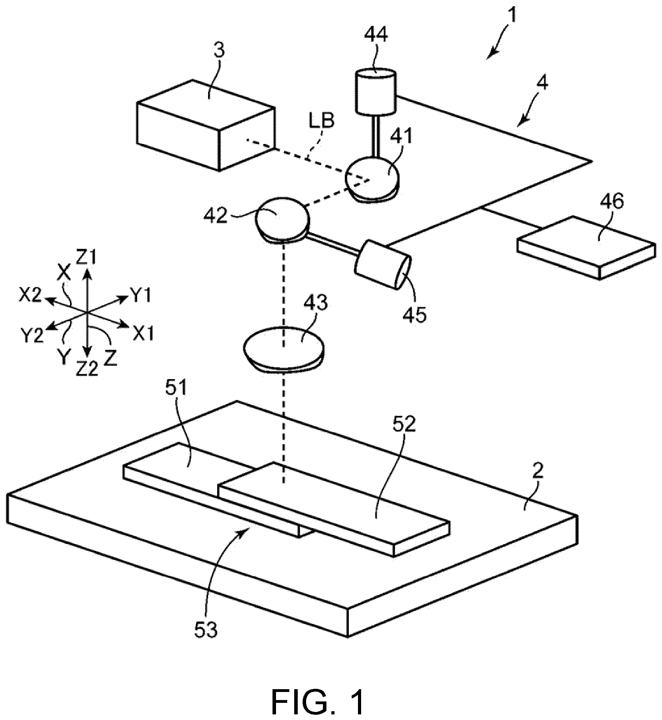

Fig. 1 is a perspective view schematically illustrating a configuration of a joining apparatus 1 according to this embodiment. The joining apparatus 1 is a joining apparatus of dissimilar metal plates which joins a first metal plate 51 and a second metal plate 52 which are made of different materials.

The joining apparatus 1 irradiates a laser beam LB onto an overlapping area 53 where the first metal plate 51 and the second metal plate 52 overlap with each other in the up-and-down direction Z to melt and solidify the overlapping area 53 locally, and join the first metal plate 51 and the second metal plate 52 in the overlapping area 53. For example, when the laser beam LB is irradiated onto the overlapping area 53, the overlapping area 53 is melted locally by heat accompanying the irradiation of the laser beam LB, and the overlapping area 53 is then solidified to join the first metal plate 51 and the second metal plate 52.

The first metal plate 51 may be made of aluminum or an aluminum alloy, and may be formed into a flat-plate-like object with a given thickness. The second metal plate 52 may be made of copper or a copper alloy, and may be formed into a flat-plate-like object with a given thickness.

The joining apparatus 1 is provided with a placement module (or a placement unit, or a support base) 2, an oscillation module (or an oscillation unit, or a laser oscillator) 3, and an irradiation module (or an irradiation unit, or a scanner) 4.

The placement module 2 is a module for forming the overlapping area 53 where the first metal plate 51 and the second metal plate 52 overlap with each other in the up-and-down direction Z, e.g., mainly by taking the form of a support base. When the first metal plate 51 and the second metal plate 52 are placed on the placement module 2, the overlapping area 53 where the first metal plate 51 and the second metal plate 52 overlap with each other is formed.

In the overlapping area 53, the second metal plate 52 may be superimposed on the first metal plate 51, or the first metal plate 51 may be superimposed on the second metal plate 52. In this embodiment, in the overlapping area 53, the second metal plate 52, which is high in thermal conductivity is superimposed on the first metal plate 51.

The oscillation module 3 is a laser oscillator which oscillates the laser beam LB. The oscillation module 3 may oscillate a laser selected from a CO₂ laser, an yttrium aluminum garnet (YAG) laser, a semiconductor laser, a fiber laser, or a laser diode (LD) excitation solid-state laser, for the laser beam LB.

The irradiation module 4 is a module which irradiates the laser beam LB oscillated by the oscillation module 3 onto the overlapping area 53. For example, the irradiation module 4 reciprocates an irradiation point of the laser beam LB in the perpendicular direction X, while moving the irradiation point in the given direction Y to form a welded part in the overlapping area 53, while drawing an irradiation locus of a given shape.

The irradiation module 4 may be comprised of a scanner such as a Galvano scanner. In this case, the irradiation module 4 may include a first mirror 41, a second mirror 42, a condenser lens 43, an X-axis motor 44, a Y-axis motor 45, and a control driver 46.

The first mirror 41 is a mirror which reflects the laser beam LB, and is pivotably driven by the X-axis motor 44. The first mirror 41 may be rotated by the X-axis motor 44 to change a reflection direction of the laser beam LB to reciprocate the irradiation point of the laser beam LB with respect to the overlapping area 53 in the perpendicular direction X.

The second mirror 42 is a mirror which reflects the laser beam LB reflected by the first mirror 41, and is pivotably driven by the Y-axis motor 45. The second mirror 42 may be rotated by the Y-axis motor 45 to change the reflection direction of the laser beam LB, and moves the irradiation point of the laser beam LB with respect to the overlapping area 53 in the given direction Y

The condenser lens 43 is a lens which condenses or collects the laser beam LB reflected by the second mirror 42, and leads the condensed laser beam to the overlapping area 53. The control driver 46 may control the X-axis motor 44 and the Y-axis motor 45 to reciprocate the irradiation point of the laser beam LB in the perpendicular direction X, while moving the irradiation point with respect to the overlapping area 53 in the given direction Y.

### [Joining Method]

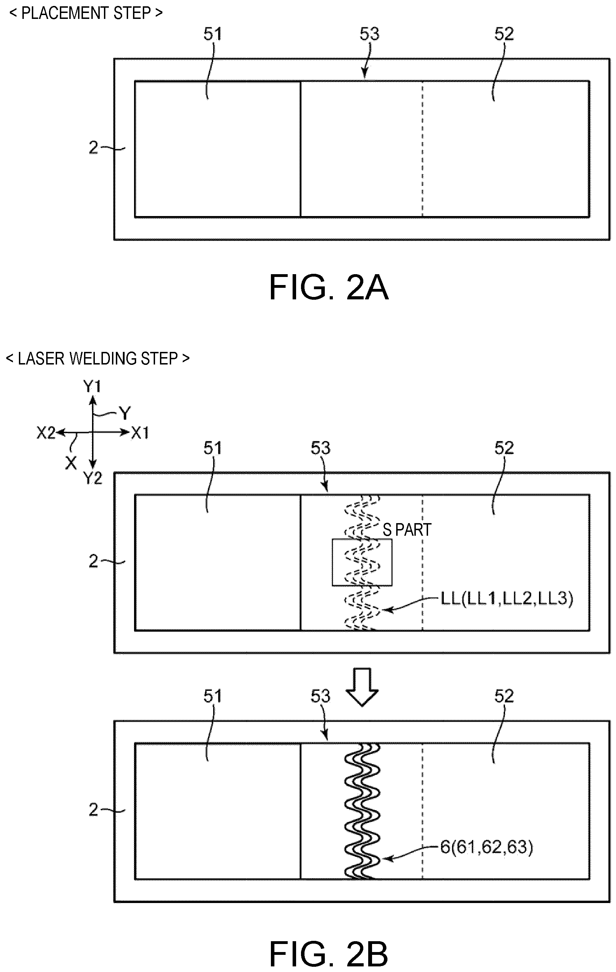

The joining method of the dissimilar metal plates according to this embodiment is now described with reference to Figs. 2A to 4. This joining method may be implemented using the above-described joining apparatus 1. The joining method includes a placement step and a laser welding step.

As illustrated in Fig. 2A, in the placement step, the first metal plate 51 and the second metal plate 52 are placed on the placement module 2 (support base) so that the overlapping area 53 where the first metal plate 51 and the second metal plate 52 are overlapped with each other is formed. This placement of the first metal plate 51 and the second metal plate 52 onto the placement module 2 may be performed automatically by the placement module 2, or may be carried out by a human operator.

As illustrated in Fig. 2B, in the laser welding step, the irradiation module 4 irradiates the laser beam LB oscillated by the oscillation module 3 onto an upper surface of the overlapping area 53. The irradiation module 4 irradiates the laser beam LB onto the upper surface of the overlapping area 53 e.g., through the condenser lens 43, based on the rotation of the first mirror 41 and the second mirror 42 according to the control of the X-axis motor 44 and the Y-axis motor 45 by the control driver 46.

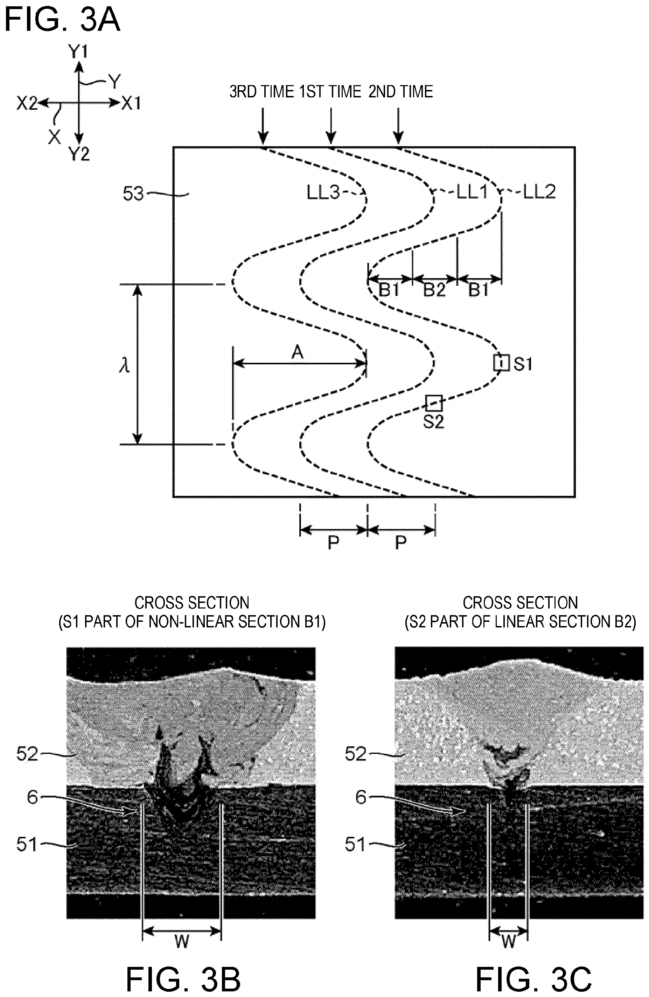

In the laser welding step, the irradiation module 4 reciprocates the irradiation point of the laser beam LB with respect to the upper surface of the overlapping area 53 in the given direction Y, while moving the irradiation point in the perpendicular direction X to form a welded part 6 along an irradiation locus LL of a wave shape, e.g., a sine-wave shape, with a given amplitude A (see Fig. 3A) in the perpendicular direction X. As illustrated in Figs. 2B and 3A, the wave-shaped irradiation locus (or the sine-wave-shaped irradiation locus) LL may have the shape of a wave, particularly a sine wave, with a wavelength λ in the given direction Y and the amplitude A in the perpendicular direction X, or may have the shape of a triangle wave or a sawtooth wave similar to the sine wave.

Particularly, in this embodiment, the amplitude A of the irradiation locus LL may be a so-called "peak-to-peak amplitude" which is defined by a distance in the perpendicular direction X from a crest peak of the sine wave to an adjacent valley peak. That is, the range of the amplitude A of the irradiation locus LL is a range from a crest peak point to a valley bottom (peak) point of the sine-wave shape.

In the laser welding step, the irradiation module 4 irradiates the laser beam LB to draw the sine-wave-shaped irradiation locus LL in the overlapping area 53 so that it forms the welded part 6 along the irradiation locus LL. For example, as illustrated in Figs. 2B and 3A, the sine-wave-shaped irradiation locus LL becomes a locus within a range of the amplitude A of the sine-wave shape, which is comprised of a nonlinear section B1 with a curve including a peak of a crest or a valley, and a linear section B2 with a straight line connecting one nonlinear section B1 to another nonlinear section B1 including the center of the amplitude A (the center of the wave).

A moving speed of the irradiation point of the laser beam LB when drawing the irradiation locus LL may be normally set faster in the linear section B2 than in the nonlinear section B1. In this case, since, the width W and the depth of the welded part 6 formed along the irradiation locus LL of the laser beam LB, they become smaller in the linear section B2 than in the nonlinear section B1, the welding volume of the welded part 6 along the irradiation locus LL becomes smaller in the linear section B2 than in the nonlinear section B1 (see the cross-sectional views in Figs. 3A and 3B). For this reason, the j oint strength of the dissimilar metal plates, which are the first metal plate 51 and the second metal plate 52, may be lowered.

Thus, the irradiation module 4 irradiates the laser beam LB onto the overlapping area 53 so that the laser beam LB draws a plurality of irradiation loci LL which are separated from each other in the perpendicular direction X, and, particularly, the nonlinear section B1 including a peak of the crest or valley of one of irradiation loci LL which are adjacent to each other in the perpendicular direction X overlaps with the range of amplitude A of the other irradiation locus LL, when seen in the given direction Y Therefore, when seen in the given direction Y, it is possible to overlap the nonlinear section B1 including a peak of the crest or valley of one of the irradiation loci LL which are adjacent to each other in the perpendicular direction X with the linear section B2 within the range of the amplitude A of the other irradiation locus LL. For this reason, in the welded part 6 formed along each of the plurality of irradiation loci LL, the linear section B2 with small welding volume can be reinforced by the nonlinear section B1 with a large welding volume, when seen in the given direction. This increases the joint strength of the dissimilar metal plates (the first metal plate 51 and the second metal plate 52).

In this embodiment, in the laser welding step, the irradiation module 4 may irradiate the laser beam LB onto the overlapping area 53 to draw three or more irradiation loci LL with the same amplitude A, without shifting the phase, so that a pitch P between the centers of the amplitude A (the centers of the waves) becomes equal. In the example of Fig. 3A, the irradiation module 4 irradiates the laser beam LB to the overlapping area 53 to draw the three irradiation loci LL (a first irradiation locus LL1, a second irradiation locus LL2, and a third irradiation locus LL3) with the same amplitude A, without shifting the phase, so that the irradiation loci LL are separated from each other in the perpendicular direction X at the equal pitch P.

For example, the irradiation module 4 draws the second irradiation locus LL2 at a position adjacent to the first irradiation locus LL1 on one side (direction X1) in the perpendicular direction X, and draws the third irradiation locus LL3 at a position adjacent to the first irradiation locus LL1 on the other side (direction X2) in the perpendicular direction X. In this case, when seen in the given direction Y, it is possible to more securely overlap the nonlinear sections B1 of the second irradiation locus LL2 and the third irradiation locus LL3 with the linear section B2 within the range of the amplitude A of the first irradiation locus LL1. For this reason, when one of the welded parts 6 formed along the first irradiation locus LL1 is referred to as a "first welded part 61 (Fig. 2B)," another welded part 6 formed along the second irradiation locus LL2 is referred to as a "second welded part 62 (Fig. 2B)," and another welded part 6 formed along the third irradiation locus LL3 is referred to as a "third welded part 63 (Fig. 2B)," the linear section B2 with a small welding volume (the first welded part 61) can be reinforced more securely by the nonlinear sections B1 with large welding volume (the second welded part 62 and the third welded part 63)), when seen in the given direction Y.

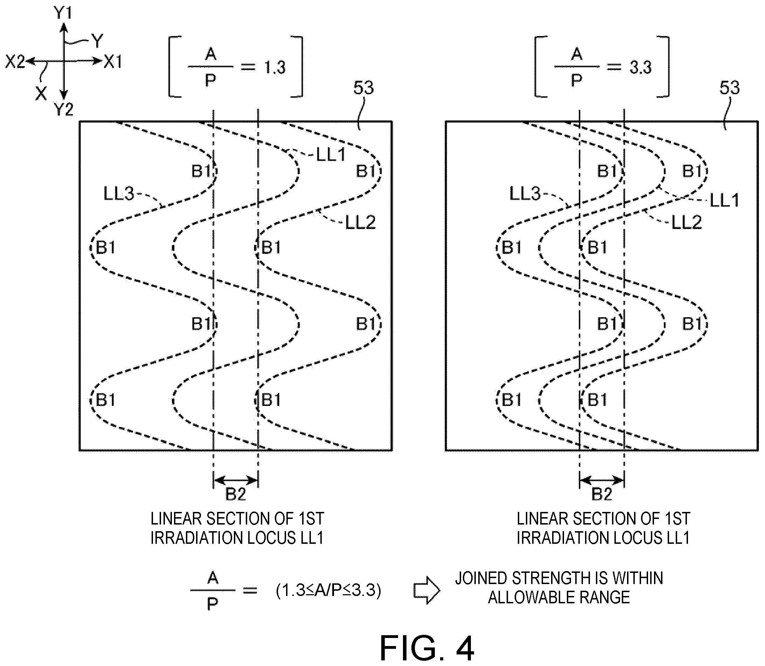

For example, as illustrated in Fig. 4, in the laser welding step, the irradiation module 4 sets a ratio (A/P) of the amplitude A to the pitch P within a range of 1.3 or more and 3.3 or less (1.3≤A/P≤3.3) for the plurality of irradiation loci LL (the first irradiation locus LL1, the second irradiation locus LL2, and the third irradiation locus LL3).

By setting the ratio (A/P) to 1.3 or more, it is possible to overlap at least a part of the nonlinear sections B1 of the second irradiation locus LL2 and the third irradiation locus LL3 with the linear section B2 within the range of the amplitude A of the first irradiation locus LL1, when seen in the given direction Y. If the ratio (A/P) is set to less than 1.3, it may not be able to effectively overlap the nonlinear sections B1 of the second irradiation locus LL2 and the third irradiation locus LL3 with the linear section B2 within the range of the amplitude A of the first irradiation locus LL1.

However, by setting the ratio (A/P) to 3.3 or less, it is possible to overlap the nonlinear sections B1 of the second irradiation locus LL2 and the third irradiation locus LL3 with the linear section B2 within the range of the amplitude A of the first irradiation locus LL1, when seen in the given direction Y, and the linear sections B2 of the second irradiation locus LL2 and the third irradiation locus LL3 are suppressed from overlapping with each other. If the ratio (A/P) exceeds 3.3, the overlapping portions of the linear sections B2 of the second irradiation locus LL2 and the third irradiation locus LL3 with the linear section B2 of the first irradiation locus LL1 may increase.

As described above, the irradiation module 4 sets the ratio (A/P) within the range of 1.3 or more and 3.3 or less for the plurality of irradiation loci LL (the first irradiation locus LL1, the second irradiation locus LL2, and the third irradiation locus LL3). Thus, it is possible to overlap the nonlinear sections B1 of the second irradiation locus LL2 and the third irradiation locus LL3 with the linear section B2 within the range of the amplitude A of the first irradiation locus LL1 more securely, when seen in the given direction Y. For this reason, in the first welded part 61, the second welded part 62, and the third welded part 63 which are formed along the first irradiation locus LL1, the second irradiation locus LL2, and the third irradiation locus LL3, respectively, the linear sections B2 with a small welding volume (the second welded part 62 and the third welded part 63) can be reinforced more securely by the nonlinear section B1 with a large welding volume (the first welded part 61), when seen in the given direction Y. This increases the joint strength of the dissimilar metal plates (the first metal plate 51 and the second metal plate 52).

As illustrated in Fig. 3A, when drawing the plurality of irradiation loci LL in the overlapping area 53, the irradiation module 4 may irradiate the laser beam LB onto the overlapping area 53 so that, on the basis of the irradiation locus LL drawn on the first time, the irradiation loci LL on and after the second time are alternately drawn on one side X1 and the other side X2 in the perpendicular direction X. For example, when drawing the three irradiation loci LL (the first irradiation loci LL1, the second irradiation locus LL2, and the third irradiation locus LL3) in the overlapping area 53, the irradiation module 4 draws, on the basis of the first irradiation locus LL1 on the first time, draws the second-time second irradiation locus LL2 on one side X1 in the perpendicular direction X, and then draws the third-time third irradiation locus LL3 on the other side X2 in the perpendicular direction X. In this case, the third-time third irradiation locus LL3 may be drawn so that it is adjacent to the second-time second irradiation locus LL2 on the opposite side of the first-time first irradiation locus LL1. That is, the irradiation loci LL on and after the third time will be drawn adjacent to the irradiation locus LL drawn two times before. Thus, while the influence of the heat caused by the irradiation of the laser beam LB is reduced, the irradiation loci LL on and after the third time can be drawn. For this reason, a weld distortion on the welded part 6 resulting from the influence of the heat caused by the irradiation of the laser beam LB can be suppressed. This increases the joint strength of the dissimilar metal plates (the first metal plate 51 and the second metal plate 52).

The weld distortion on the welded part 6 resulting from the influence of the heat caused by the irradiation of the laser beam LB may include the weld distortion resulting from the thickness of the layer of the intermetallic compound generated in the welded part 6. When the first metal plate 51 is made of aluminum and the second metal plate 52 is made of copper, the intermetallic compound generated in the welded part 6 may include Cu₉Al₄, CuAl, and CuAl₂. Generally, regarding the strength of such intermetallic compounds, Cu₉Al₄ is the strongest, CuAl₂ is the weakest, and CuAl is intermediate. For this reason, if the thickness of the layer of CuAl₂ is large, the joint strength of the dissimilar metal plates may be lowered. Therefore, when drawing the plurality of irradiation loci LL in the overlapping area 53, it is necessary to reduce the influence of the heat caused by the irradiation of the laser beam LB as much as possible.

In the laser welding step, the irradiation module 4 may irradiate the laser beam LB onto the overlapping area 53 so that the plurality of irradiation loci LL are drawn on one side Y1 in the given direction Y which goes from one side Y1 to the other side Y2. For example, when drawing the three irradiation loci LL (the first irradiation loci LL1, the second irradiation locus LL2, and the third irradiation locus LL3) in the overlapping area 53, the irradiation module 4 draws each locus from one side Y1 to the other side Y2 in the given direction Y.

In this case, as compared with a case where, after drawing the first irradiation locus LL1 from one side Y1 to the other side Y2 in the given direction Y, the second irradiation locus LL2 is then drawn from the other side Y2 to one side Y1 in a turn-back fashion, and the third irradiation locus LL3 is again drawn from one side Y1 to the other side Y2 in a turn-back fashion, the first irradiation locus LL1, the second irradiation locus LL2, and the third irradiation locus LL3 may be drawn with a sufficient or longer interval therebetween. Thus, the first irradiation locus LL1, the second irradiation locus LL2, and the third irradiation locus LL3 can be drawn in the state where the influence of the heat caused by the irradiation of the laser beam LB is reduced. For this reason, the weld distortion on the welded part 6 resulting from the influence of the heat caused by the irradiation of the laser beam LB can be suppressed. This increases the joint strength of the dissimilar metal plates (the first metal plate 51 and the second metal plate 52).

### [Joined Body]

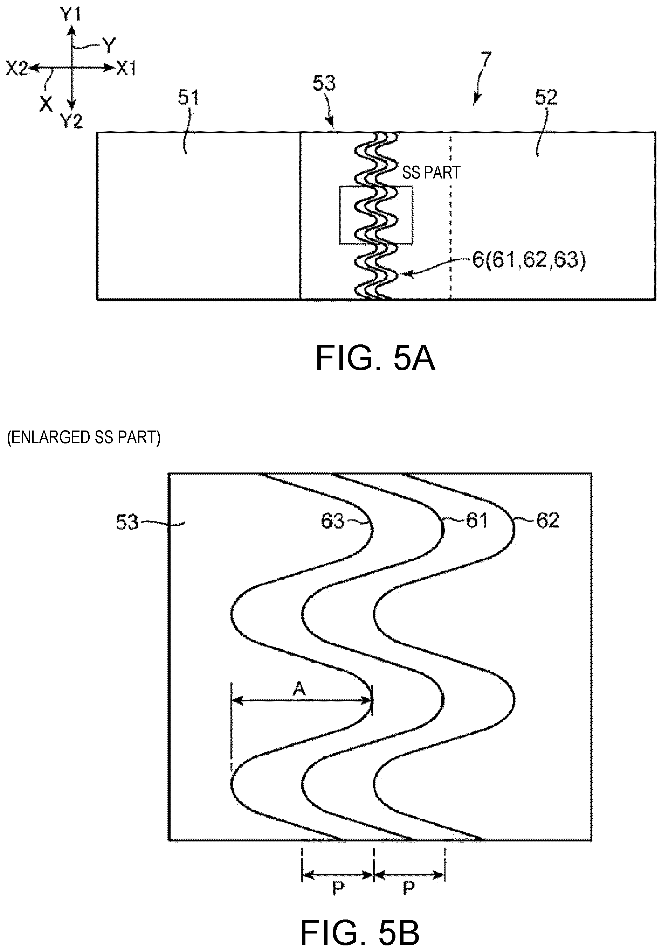

A joined body 7 of the dissimilar metal plates according to this embodiment is described with reference to Figs. 5A and 5B. The joined body 7 of the dissimilar metal plates is produced by the joining method using the above-described joining apparatus 1. The joined body 7 is a joined body of the dissimilar metal plates where the first metal plate 51 and the second metal plate 52 which are made of different materials are joined.

The joined body 7 includes the overlapping area 53 where the first metal plate 51 and the second metal plate 52 are overlapped with each other, and the plurality of welded parts 6 formed in the overlapping area 53. On the upper surface of the overlapping area 53, the plurality of welded parts 6 which extend in the given direction Y and have the sine-wave shape with the given amplitude A in the perpendicular direction X perpendicular to the given direction Y The plurality of welded parts 6 are separated from each other in the perpendicular direction X, and when seen in the given direction Y, and the wave shape of one of the welded parts 6 which are adjacent in the perpendicular direction X overlaps within the range of the amplitude A of the wave shape of the other welded part 6. Therefore, in the joined body 7, the joint strength of the dissimilar metal plates (the first metal plate 51 and the second metal plate 52) is increased.

For example, in this embodiment, in the joined body 7, the plurality of welded parts 6 which are the three or more sine-wave-shaped waves with the same amplitude A, without shifting the phase, are formed in the overlapping area 53 so that the pitch P between the centers of the amplitudes A becomes equal. In the example of Fig. 5B, in the joined body 7, the first welded part 61, the second welded part 62, and the third welded part 63 along the shape of the three sine waves with the same amplitude A are formed in the overlapping area 53 so that the welded parts are separated from each other in the perpendicular direction X at the equal pitch P, without shifting the phase.

On the upper surface of the overlapping area 53, the second welded part 62 is formed at the position adjacent to the first welded part 61 on one side X1 in the perpendicular direction X, and the third welded part 63 is formed at the position adjacent to the first welded part 61 on the other side X2 in the perpendicular direction X. In the first welded part 61, the second welded part 62, and the third welded part 63 formed on the upper surface of the overlapping area 53, the ratio (A/P) of the amplitude A to the pitch P is set within the range of 1.3 or more and 3.3 or less. Therefore, in the joined body 7, the joint strength of the dissimilar metal plates (the first metal plate 51 and the second metal plate 52) is increased more securely.

### [Modified Embodiment(s)]

As described above, although one embodiment is described, the present invention is not limited to this embodiment, and may be modified into the following embodiments.

Although in the above embodiment the irradiation module 4 of the joining apparatus 1 is comprised of the Galvano scanner, the present invention is not limited to such a configuration. The irradiation module 4 may have any configuration, as long as it can reciprocate the irradiation point of the laser beam LB onto the overlapping area 53 in the perpendicular direction X, while moving the irradiation point in the given direction Y. For example, the placement module 2 on which the first metal plate 51 and the second metal plate 52 are disposed may be movable in the given direction Y, and the irradiation module 4 may be swingable in the perpendicular direction X according to the movement of the placement module 2. In this case, the irradiation point of the laser beam LB on the overlapping area 53 is reciprocated in the perpendicular direction X according to the swing of the irradiation module 4, while moving in the given direction Y according to the movement of the placement module 2.

It should be understood that the embodiments herein are illustrative and not restrictive, since the scope of the invention is defined by the appended claims rather than by the description preceding them.

### DESCRIPTION OF REFERENCE CHARACTERS

- 1: Joining Apparatus
- 2: Placement Module
- 3: Oscillation Module
- 4: Irradiation Module
- 51: First Metal Plate
- 52: Second Metal Plate
- 53: Overlapping Area
- 6: Welded Part
- 61: First Welded Part
- 62: Second Welded Part
- 63: Third Welded Part
- 7: Joined Body
- LB: Laser Beam
- LL: Irradiation Locus
- LL1: First Irradiation Locus
- LL2: Second Irradiation Locus
- LL3: Third Irradiation Locus
- X: Perpendicular Direction
- Y: Given Direction

## Claims

1. A method of joining dissimilar metal plates comprised of a first metal plate (51) and a second metal plate (52) that are made of different materials, the method comprising the steps of:
a placement step of forming an overlapping area (53) where the first metal plate (51) and the second metal plate (52) are placed so as to be overlapped with each other; and
a laser welding step of irradiating a laser beam (LB) onto the overlapping area (53), and reciprocating an irradiation point of the laser beam (LB) onto the overlapping area (53) in a perpendicular direction (X) perpendicular to a given direction (Y), while moving the irradiation point in the given direction (Y) to form a welded part (6) in the overlapping area (53) along an irradiation locus (LL) of a wave shape or a sine-wave shape having a given amplitude in the perpendicular direction (X),
**characterised in that**
in the laser welding step, the laser beam (LB) is irradiated onto the overlapping area (53) so that a plurality of irradiation loci are drawn so as to be separated from each other in the perpendicular direction (X), and when seen in the given direction (Y), one of the irradiation loci adjacent to another of the irradiation loci in the perpendicular direction (X) is overlapped within a range of the amplitude of the other irradiation locus (LL).

2. The method of claim 1, wherein, in the laser welding step, the laser beam (LB) is irradiated onto the overlapping area (53) so that three or more irradiation loci are drawn with the same amplitude, without shifting phase, and a pitch of the centers of the amplitudes is an equal interval.

3. The method of claim 2, wherein, in the laser welding step, a ratio of the amplitude to the pitch is set within a range of 1.3 or more and 3.3 or less for the plurality of irradiation loci.

4. The method of any one of the preceding claims, wherein, in the laser welding step, when drawing the plurality of irradiation loci, the laser beam (LB) is irradiated onto the overlapping area (53) on a basis of the irradiation locus (LL) drawn in a first time so that the irradiation loci in and after a second time are drawn alternatingly on either side in the perpendicular direction (X).

5. The method of any one of the preceding claims, wherein, in the laser welding step, the laser beam (LB) is irradiated onto the overlapping area (53) so that the plurality of irradiation loci are all drawn in one way in the given direction (Y).

6. The method of any one of the preceding claims,
wherein the welded part (6) is formed along the irradiation locus (LL) of the wave shape, and
wherein when seen in the given direction (Y) a nonlinear section (B1) of one of the irradiation loci which are adjacent to each other in the perpendicular direction (X) overlap with a linear section (B2) of the other irradiation locus (LL).

7. The method of claim 6, wherein the nonlinear section (B1) includes a peak of a crest or valley of the irradiation locus (LL).

8. A joining apparatus (1) configured to join dissimilar metal plates comprised of a first metal plate (51) and a second metal plate (52) that are made of different materials, the apparatus comprising:
a support base (2) configured to form an overlapping area (53) where the first metal plate (51) and the second metal plate (52) are placed so as to be overlapped with each other;
a laser oscillator (3) configured to oscillate a laser beam (LB); and
a scanner (4) including a control driver (46),
wherein the scanner (4) is configured to irradiate the laser beam (LB) oscillated by the laser oscillator (3) onto the overlapping area (53), and reciprocate an irradiation point of the laser beam (LB) onto the overlapping area (53) in a perpendicular direction (X) perpendicular to a given direction (Y), while moving the irradiation point in the given direction (Y) to form a welded part (6) in the overlapping area (53) along an irradiation locus (LL) of a wave shape or a sine-wave shape having given amplitude in the perpendicular direction (X), according to a control by the control driver (46), **characterised in that**
the scanner (4) is configured to irradiate the laser beam (LB) onto the overlapping area (53) so that a plurality of irradiation loci are drawn so as to be separated from each other in the perpendicular direction (X), and when seen in the given direction (Y), one of the irradiation loci adjacent to each other in the perpendicular direction (X) is overlapped within a range of the amplitude of the other irradiation locus (LL).

9. The joining apparatus (1) of claim 8, wherein the scanner (4) is configured to irradiate the laser beam (LB) onto the overlapping area (53) so that three or more irradiation loci are drawn with the same amplitude, without shifting phase, and a pitch of the centers of the amplitudes is an equal interval.

10. The joining apparatus (1) of claim 9, wherein a ratio of the amplitude to the pitch is set within a range of 1.3 or more and 3.3 or less for the plurality of irradiation loci.

11. The joining apparatus (1) of any one of claims 8 to 10, wherein when drawing the plurality of irradiation loci, the scanner (4) is configured to irradiate the laser beam (LB) onto the overlapping area (53) on a basis of the irradiation locus (LL) drawn in a first time so that the irradiation loci in and after a second time are drawn alternatingly on either side in the perpendicular direction (X).

12. The joining apparatus (1) of any one of claims 8 to 11, wherein the scanner (4) is configured to irradiate the laser beam (LB) onto the overlapping area (53) so that the plurality of irradiation loci are all drawn in one way in the given direction (Y).

13. The joining apparatus (1) of any one of claims 8 to 12,
wherein the scanner (4) is configured to form the welded part (6) along the irradiation locus (LL) of the wave shape, and
wherein the scanner (4) is configured to irradiate the laser beam (LB) onto the overlapping area (53) so that when seen in the given direction (Y) a nonlinear section (B1) of one of the irradiation loci which are adjacent to each other in the perpendicular direction (X) overlaps with a linear section (B2) of the other irradiation locus (LL).

14. The joining apparatus (1) of claim 13, wherein the nonlinear section (B1) includes a peak of a crest or valley of the irradiation locus (LL).

15. A joined body (7) of dissimilar metal plates, formed by joining a first metal plate (51) and a second metal plate (52) that are made of different materials, comprising:
an overlapping area (53) wherein the first metal plate (51) and the second metal plate (52) are overlapped with each other; **characterised by**
a plurality of welded parts (6), each formed in the overlapping area (53), extending in a given direction (Y), and having a wave shape or a sine-wave shape with given amplitude in a perpendicular direction (X) perpendicular to the given direction (Y),
wherein the plurality of welded parts (6) are separated from each other in the perpendicular direction (X), and when seen in the given direction (Y), the wave shape or the sine-wave shape of one of the welded parts (6) adj acent to another of the welded parts (6) in the perpendicular direction (X) is overlapped within a range of the amplitude of the wave shape or the sine-wave shape of the other welded part (6).

## Patentansprüche

1. Verfahren zum Verbinden ungleichartiger Metallplatten, die aus einer ersten Metallplatte (51) und einer zweiten Metallplatte (52) bestehen, die aus unterschiedlichen Materialien hergestellt sind, das Verfahren umfassend die Schritte:
einen Platzierungsschritt zum Ausbilden eines Überlappungsbereichs (53), in dem die erste Metallplatte (51) und die zweite Metallplatte (52) platziert werden, um miteinander überlappt zu werden; und
einen Laserschweißschritt zum Strahlen eines Laserstrahls (LB) auf den Überlappungsbereich (53) und Hin- und Herbewegen eines Strahlungspunkts des Laserstrahls (LB) auf den Überlappungsbereich (53) in einer senkrechten Richtung (X) senkrecht zu einer vorgegebenen Richtung (Y), während der Bestrahlungspunkt in der vorgegebenen Richtung (Y) bewegt wird, um ein geschweißtes Teil (6) in dem Überlappungsbereich (53) entlang einer Strahlungsbahn (LL) einer Wellenform oder einer Sinuswellenform, die eine vorgegebene Amplitude in der senkrechten Richtung (X) aufweist, auszubilden,
**dadurch gekennzeichnet, dass**
in dem Laserschweißschritt, der Laserstrahl (LB) auf den Überlappungsbereich (53) gestrahlt wird, sodass eine Vielzahl von Strahlungsbahnen gezogen werden, um in der senkrechten Richtung (X) voneinander getrennt zu sein, und bei einem Betrachten in der gegebenen Richtung (Y), eine der Strahlungsbahnen, die an eine andere der Strahlungsbahnen in der senkrechten Richtung (X) angrenzt, innerhalb einer Spanne der Amplitude der anderen Strahlungsbahn (LL) überlappt wird.

2. Verfahren nach Anspruch 1, wobei, in dem Laserschweißschritt, der Laserstrahl (LB) auf den Überlappungsbereich (53) gestrahlt wird, sodass drei oder mehr Strahlungsbahnen mit derselben Amplitude ohne Phasenverschiebung gezogen werden, und ein Abstand der Mitten der Amplituden ein gleiches Intervall beträgt.

3. Verfahren nach Anspruch 2, wobei, in dem Laserschweißschritt, ein Verhältnis der Amplitude zu dem Abstand für die Vielzahl von Strahlungsbahnen innerhalb einer Spanne von 1,3 oder mehr und 3,3 oder weniger eingestellt wird.

4. Verfahren nach einem der vorstehenden Ansprüche, wobei, in dem Laserschweißschritt, bei einem Ziehen der Vielzahl von Strahlungsbahnen, der Laserstrahl (LB) auf den Überlappungsbereich (53) auf einer Basis der bei einem ersten Mal gezogenen Strahlungsbahnen (LL) gestrahlt wird, sodass die Strahlungsbahnen bei und nach einem zweiten Mal abwechselnd auf beiden Seiten in der senkrechten Richtung (X) gezogen werden.

5. Verfahren nach einem der vorstehenden Ansprüche, wobei, in dem Laserschweißschritt, der Laserstrahl (LB) auf den Überlappungsbereich (53) gestrahlt wird, sodass die Vielzahl von Strahlungsbahnen alle auf eine Weise in der gegebenen Richtung (Y) gezogen werden.

6. Verfahren nach einem der vorstehenden Ansprüche,
wobei das geschweißte Teil (6) entlang der Strahlungsbahn (LL) der Wellenform ausgebildet ist, und
wobei sich, bei dem Betrachten in der gegebenen Richtung (Y), ein nichtlinearer Abschnitt (B1) einer der Strahlungsbahnen, die in der senkrechten Richtung (X) aneinander angrenzen, mit einem linearen Abschnitt (B2) der anderen Strahlungsbahn (LL) überlappt.

7. Verfahren nach Anspruch 6, wobei der nichtlineare Abschnitt (B1) eine Spitze eines Gipfels oder eines Tals der Strahlungsbahn (LL) einschließt.

8. Verbindungseinrichtung (1), die konfiguriert ist, um ungleichartige Metallplatten zu verbinden, die aus einer ersten Metallplatte (51) und einer zweiten Metallplatte (52) bestehen, die aus unterschiedlichen Materialien hergestellt sind, die Einrichtung umfassend:
eine Stützbasis (2), die konfiguriert ist, um einen Überlappungsbereich (53) auszubilden, in dem die erste Metallplatte (51) und die zweite Metallplatte (52) platziert sind, um miteinander überlappt zu werden;
einen Laseroszillator (3), der konfiguriert ist, um einen Laserstrahl (LB) zu oszillieren; und
einen Scanner (4), der einen Steuertreiber (46) einschließt,
wobei der Scanner (4) konfiguriert ist, um den durch den Laseroszillator (3) oszillierten Laserstrahl (LB) auf den Überlappungsbereich (53) zu strahlen, und einen Strahlungspunkt des Laserstrahls (LB) auf dem Überlappungsbereich (53) in einer senkrechten Richtung (X) senkrecht zu einer vorgegebenen Richtung (Y) hin- und herzubewegen, während der Strahlungspunkt in der vorgegebenen Richtung (Y) bewegt wird, um, gemäß einer Steuerung durch den Steuertreiber (46), ein geschweißtes Teil (6) in dem Überlappungsbereich (53) entlang einer Strahlungsbahn (LL) einer Wellenform oder einer Sinuswellenform, die eine vorgegebene Amplitude in der senkrechten Richtung (X) aufweist, auszubilden, **dadurch gekennzeichnet, dass**
der Scanner (4) konfiguriert ist, um den Laserstrahl (LB) auf den Überlappungsbereich (53) zu strahlen, sodass eine Vielzahl von Strahlungsbahnen gezogen werden, um in der senkrechten Richtung (X) voneinander getrennt zu sein, und bei dem Betrachten in der gegebenen Richtung (Y), eine der Strahlungsbahnen, die in der senkrechten Richtung (X) aneinander angrenzen, innerhalb einer Spanne der Amplitude der anderen Strahlungsbahn (LL) überlappt wird.

9. Verbindungseinrichtung (1) nach Anspruch 8, wobei der Scanner (4) konfiguriert ist, um den Laserstrahl (LB) auf den Überlappungsbereich (53) zu strahlen, sodass drei oder mehr Strahlungsbahnen mit derselben Amplitude, ohne Phasenverschiebung, gezogen werden, und ein Abstand der Mitten der Amplituden ein gleiches Intervall beträgt.

10. Verbindungseinrichtung (1) nach Anspruch 9, wobei ein Verhältnis der Amplitude zu dem Abstand für die Vielzahl von Strahlungsbahnen in einer Spanne von 1,3 oder mehr und 3,3 oder weniger eingestellt wird.

11. Verbindungseinrichtung (1) nach einem der Ansprüche 8 bis 10, wobei, bei dem Ziehen der Vielzahl von Strahlungsbahnen, der Scanner (4) konfiguriert ist, um den Laserstrahl (LB) auf den Überlappungsbereich (53) auf einer Basis der bei einem ersten Mal gezogenen Strahlungsbahn (LL) zu strahlen, sodass die Strahlungsbahnen bei und nach einem zweiten Mal abwechselnd auf beiden Seiten in der senkrechten Richtung (X) gezogen werden.

12. Verbindungseinrichtung (1) nach einem der Ansprüche 8 bis 11, wobei der Scanner (4) konfiguriert ist, um den Laserstrahl (LB) auf den Überlappungsbereich (53) zu strahlen, sodass die Vielzahl von Strahlungsbahnen alle in einer Weise in der vorgegebenen Richtung (Y) gezogen werden.

13. Verbindungseinrichtung (1) nach einem der Ansprüche 8 bis 12,
wobei der Scanner (4) konfiguriert ist, um das geschweißte Teil (6) entlang der Strahlungsbahn (LL) der Wellenform auszubilden, und
wobei der Scanner (4) konfiguriert ist, um den Laserstrahl (LB) auf den Überlappungsbereich (53) zu strahlen, sodass sich, bei dem Betrachten in der gegebenen Richtung (Y), ein nichtlinearer Abschnitt (B1) einer der Strahlungsbahnen, die in der senkrechten Richtung (X) aneinander angrenzen, mit einem linearen Abschnitt (B2) des anderen Bestrahlungsorts (LL) überlappt.

14. Verbindungseinrichtung (1) nach Anspruch 13, wobei der nichtlineare Abschnitt (B1) eine Spitze eines Gipfels oder eines Tals der Strahlungsbahn (LL) einschließt.

15. Verbundener Körper (7) aus ungleichartigen Metallplatten, der durch Verbinden einer ersten Metallplatte (51) und einer zweiten Metallplatte (52) ausgebildet ist, die aus unterschiedlichen Materialien hergestellt sind, umfassend:
einen Überlappungsbereich (53), wobei die erste Metallplatte (51) und die zweite Metallplatte (52) miteinander überlappt sind;
**dadurch gekennzeichnet, dass**
sich eine Vielzahl von geschweißten Teilen (6), die jeweils in dem Überlappungsbereich (53) ausgebildet sind, in einer vorgegebenen Richtung (Y) erstrecken, und eine Wellenform oder eine Sinuswellenform mit vorgegebener Amplitude in einer senkrechten Richtung (X) senkrecht zu der vorgegebenen Richtung (Y) aufweisen,
wobei die Vielzahl von geschweißten Teilen (6) in der senkrechten Richtung (X) voneinander getrennt sind, und bei dem Betrachten in der vorgegebenen Richtung (Y), die Wellenform oder die Sinuswellenform eines der geschweißten Teile (6), das an ein anderes der geschweißten Teile (6) in der senkrechten Richtung (X) angrenzt, innerhalb einer Spanne der Amplitude der Wellenform oder der Sinuswellenform des anderen geschweißten Teils (6) überlappt wird.

## Revendications

1. Procédé de jonction de plaques de métal dissemblables constituées d'une première plaque en métal (51) et d'une seconde plaque en métal (52) qui sont fabriquées dans des matériaux différents, le procédé comprenant les étapes consistant en :
une étape de mise en place consistant à former une zone en chevauchement (53) où la première plaque en métal (51) et la seconde plaque en métal (52) sont placées de façon à être en chevauchement l'une avec l'autre ; et
une étape de soudage au laser consistant à irradier un faisceau laser (LB) sur la zone en chevauchement (53), et à faire aller et venir un point d'irradiation du faisceau laser (LB) sur la zone en chevauchement (53) dans une direction perpendiculaire (X) qui est perpendiculaire à une direction donnée (Y), tout en déplaçant le point d'irradiation dans la direction donnée (Y) pour former une partie soudée (6) dans la zone en chevauchement (53) le long d'un lieu d'irradiation (LL) d'une forme d'onde ou d'une forme d'onde sinusoïdale ayant une amplitude donnée dans la direction perpendiculaire (X),
**caractérisé en ce que**
dans l'étape de soudage au laser, le faisceau laser (LB) est irradié sur la zone en chevauchement (53) de sorte qu'une pluralité de lieux d'irradiation sont tracés de façon à être séparés les uns des autres dans la direction perpendiculaire (X), et lorsqu'on regarde dans la direction donnée (Y), l'un des lieux d'irradiation adjacent à un autre des lieux d'irradiation dans la direction perpendiculaire (X) est en chevauchement au sein d'une plage de l'amplitude de l'autre lieu d'irradiation (LL).

2. Procédé selon la revendication 1, dans lequel, dans l'étape de soudage au laser, le faisceau laser (LB) est irradié sur la zone en chevauchement (53) de sorte que trois lieux d'irradiation ou plus sont tracés avec la même amplitude, sans décalage de phase, et qu'un pas des centres des amplitudes est un intervalle égal.

3. Procédé selon la revendication 2, dans lequel, dans l'étape de soudage au laser, un rapport de l'amplitude au pas est réglé au sein d'une plage de 1,3 ou plus et 3,3 ou moins pour la pluralité de lieux d'irradiation.

4. Procédé selon l'une quelconque des revendications précédentes, dans lequel, dans l'étape de soudage au laser, lorsque l'on trace la pluralité de lieux d'irradiation, le faisceau laser (LB) est irradié sur la zone en chevauchement (53) en fonction du lieu d'irradiation (LL) tracé lors d'un premier passage de sorte que les lieux d'irradiation lors d'un second passage et après sont tracés en alternance de chaque côté dans la direction perpendiculaire (X).

5. Procédé selon l'une quelconque des revendications précédentes, dans lequel, dans l'étape de soudage au laser, le faisceau laser (LB) est irradié sur la zone en chevauchement (53) de sorte que la pluralité de lieux d'irradiation sont tous tracés dans un sens dans la direction donnée (Y).

6. Procédé selon l'une quelconque des revendications précédentes,
dans lequel la partie soudée (6) est formée le long du lieu d'irradiation (LL) de la forme d'onde, et
dans lequel lorsqu'on regarde dans la direction donnée (Y) une section non linéaire (B1) d'un des lieux d'irradiation qui sont adjacents les uns aux autres dans la direction perpendiculaire (X) chevauche une section linéaire (B2) de l'autre lieu d'irradiation (LL).

7. Procédé selon la revendication 6, dans lequel la section non linéaire (B1) comporte un pic d'une crête ou d'un creux du lieu d'irradiation (LL).

8. Appareil de jonction (1) configuré pour joindre des plaques de métal dissemblables constituées d'une première plaque en métal (51) et d'une seconde plaque en métal (52) qui sont fabriquées dans des matériaux différents, l'appareil comprenant :
une base de support (2) conçue pour former une zone en chevauchement (53) où la première plaque en métal (51) et la seconde plaque en métal (52) sont placées de façon à être en chevauchement l'une avec l'autre ;
un oscillateur laser (3) configuré pour faire osciller un faisceau laser (LB) ; et
un dispositif de balayage (4) comportant un mécanisme de commande (46),
dans lequel le dispositif de balayage (4) est configuré pour irradier le faisceau laser (LB) mis en oscillation par l'oscillateur laser (3) sur la zone en chevauchement (53), et faire aller et venir un point d'irradiation du faisceau laser (LB) sur la zone en chevauchement (53) dans une direction perpendiculaire (X) qui est perpendiculaire à une direction donnée (Y), tout en déplaçant le point d'irradiation dans la direction donnée (Y) pour former une partie soudée (6) dans la zone en chevauchement (53) le long d'un lieu d'irradiation (LL) d'une forme d'onde ou d'une forme d'onde sinusoïdale ayant une amplitude donnée dans la direction perpendiculaire (X), selon une commande par le mécanisme de commande (46), **caractérisé en ce que**
le dispositif de balayage (4) est configuré pour irradier le faisceau laser (LB) sur la zone en chevauchement (53) de sorte qu'une pluralité de lieux d'irradiation sont tracés de façon à être séparés les uns des autres dans la direction perpendiculaire (X), et lorsqu'on regarde dans la direction donnée (Y), l'un des lieux d'irradiation adjacents les uns aux autres dans la direction perpendiculaire (X) est en chevauchement au sein d'une plage de l'amplitude de l'autre lieu d'irradiation (LL).

9. Appareil de jonction (1) selon la revendication 8, dans lequel le dispositif de balayage (4) est configuré pour irradier le faisceau laser (LB) sur la zone en chevauchement (53) de sorte que trois lieux d'irradiation ou plus sont tracés avec la même amplitude, sans décalage de phase, et qu'un pas des centres des amplitudes est un intervalle égal.

10. Appareil de jonction (1) selon la revendication 9, dans lequel un rapport de l'amplitude au pas est réglé au sein d'une plage de 1,3 ou plus et 3,3 ou moins pour la pluralité de lieux d'irradiation.

11. Appareil de jonction (1) selon l'une quelconque des revendications 8 à 10, dans lequel lorsque l'on trace la pluralité de lieux d'irradiation, le dispositif de balayage (4) est configuré pour irradier le faisceau laser (LB) sur la zone en chevauchement (53) en fonction du lieu d'irradiation (LL) tracé lors d'un premier passage de sorte que les lieux d'irradiation lors d'un second passage et après sont tracés en alternance de chaque côté dans la direction perpendiculaire (X).

12. Appareil de jonction (1) selon l'une quelconque des revendications 8 à 11, dans lequel le dispositif de balayage (4) est configuré pour irradier le faisceau laser (LB) sur la zone en chevauchement (53) de sorte que la pluralité de lieux d'irradiation sont tous tracés dans un sens dans la direction donnée (Y).

13. Appareil de jonction (1) selon l'une quelconque des revendications 8 à 12,
dans lequel le dispositif de balayage (4) est conçu pour former la partie soudée (6) le long du lieu d'irradiation (LL) de la forme d'onde, et
dans lequel le dispositif de balayage (4) est configuré pour irradier le faisceau laser (LB) sur la zone en chevauchement (53) de sorte que lorsqu'on regarde dans la direction donnée (Y) une section non linéaire (B1) d'un des lieux d'irradiation qui sont adjacents les uns aux autres dans la direction perpendiculaire (X) chevauche une section linéaire (B2) de l'autre lieu d'irradiation (LL).

14. Appareil de jonction (1) selon la revendication 13, dans lequel la section non linéaire (B1) comporte un pic d'une crête ou d'un creux du lieu d'irradiation (LL).

15. Corps joint (7) de plaques de métal dissemblables, formé par jonction d'une première plaque en métal (51) et d'une seconde plaque en métal (52) qui sont fabriquées dans des matériaux différents, comprenant :
une zone en chevauchement (53) dans laquelle la première plaque en métal (51) et la seconde plaque en métal (52) sont en chevauchement l'une avec l'autre ; **caractérisé par**
une pluralité de parties soudées (6), formées chacune dans la zone en chevauchement (53), s'étendant dans une direction donnée (Y), et ayant une forme d'onde ou une forme d'onde sinusoïdale avec une amplitude donnée dans une direction perpendiculaire (X) qui est perpendiculaire à la direction donnée (Y),
dans lequel la pluralité de parties soudées (6) sont séparées les unes des autres dans la direction perpendiculaire (X), et lorsqu'on regarde dans la direction donnée (Y), la forme d'onde ou la forme d'onde sinusoïdale d'une des parties soudées (6) adjacente à une autre des parties soudées (6) dans la direction perpendiculaire (X) est en chevauchement au sein d'une plage de l'amplitude de la forme d'onde ou de la forme d'onde sinusoïdale de l'autre partie soudée (6).
